# EUROPEAN PATENT APPLICATION

(11) **EP 4 346 114 A1**
(43) Date of publication of application: **03.04.2024**
(21) Application number: 22198886.8
(22) Date of filing: 29.09.2022
(51) Int. Cl.: H04B 7/06, H04W 72/23, H04L 5/00

(54) **USER EQUIPMENT AND BASE STATION**

(71) Applicant: Panasonic Intellectual Property Corporation of America, Torrance, CA 90504 (US)
(72) Inventor: KUANG, Quan, Langen (DE); SUZUKI, Hidetoshi, Osaka (JP)
(74) Representative: Grünecker Patent- und Rechtsanwälte PartG mbB

(57) **Abstract**

Some exemplary embodiments relate to a user equipment, UE, a base station and respective methods for a UE and a base station. For example, the UE comprises a transceiver which, in operation, receives a relationship indicator indicating a relative spatial relationship between each of a plurality of beams. The UE further comprises circuitry which, in operation, performs a beam management procedure using the relative spatial relationship.

## Description

### BACKGROUND

### 1. Technical field

The present disclosure relates to transmission and reception of signals in communication systems, such as 3GPP communication systems. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitating efficient operation of the communication system as well as particular devices pertaining to the system.

### SUMMARY

One non-limiting and exemplary embodiment facilitates increasing the efficiency of beam management procedures, in particular in scenarios, wherein an artificial intelligence/machine learning model is utilized.

In an embodiment, the techniques disclosed here feature a user equipment, UE. The UE comprises a transceiver which, in operation, receives a relationship indicator indicating a relative spatial relationship between a plurality of beams. The UE further comprises circuitry which, in operation, performs a beam management procedure using the relative spatial relationship.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

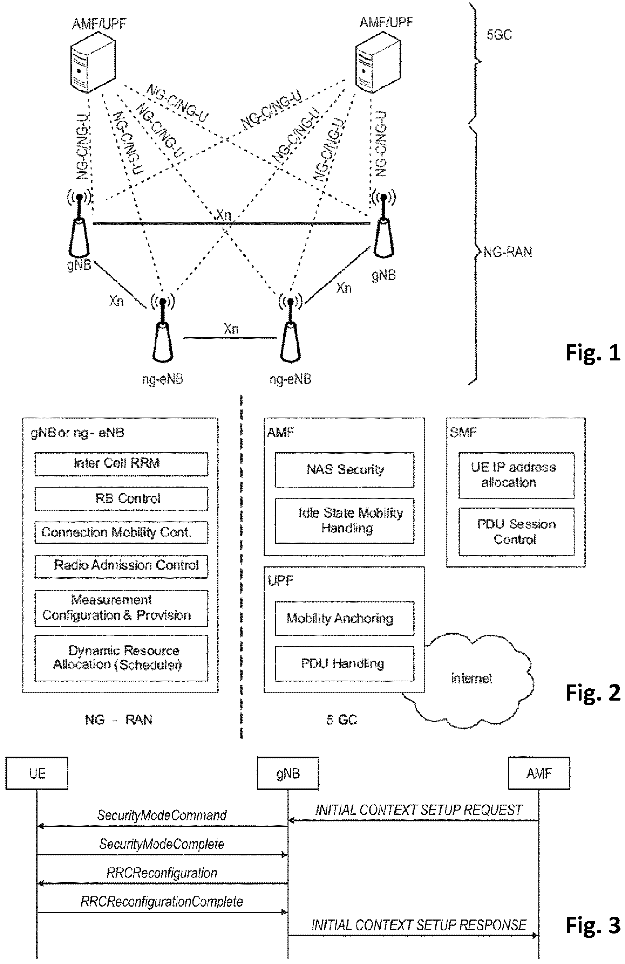

In the following exemplary embodiments are described in more detail with reference to the attached figures and drawings.
- **\Fig. 1**: shows an exemplary architecture for a 3GPP NR system;
- **Fig. 2**: is a schematic drawing that shows a functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a non-roaming;
- **Fig. 6**: illustrates an example for antenna array grouping as discussed in 3GPP;
- **Fig. 7**: illustrates an example of a cross-polarized panel array antenna model;
- **Fig. 8**: illustrates an example of a spatial relationship between multiple beams, wherein a plurality of first beams is a subset of a plurality of second beams.
- **Fig. 9**: illustrates an example of a spatial relationship between multiple beams, wherein a plurality of first beams is different from a plurality of second beams.
- **Fig. 10**: illustrates a general, simplified and exemplary block diagram of a user equipment and a base station.
- **Fig. 11**: illustrates methods performed by a user equipment and a base station.
- **Fig. 12**: illustrates another example of a spatial relationship between multiple beams.

### DETAILED DESCRIPTION

5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10-5 within 1ms). Finally, mMTC may preferably require high connection density (1,000,000 devices/km2 in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tu and the subcarrier spacing Δf are directly related through the formula Δf = 1 / Tu. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 e.g. v17.1.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see e.g. TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

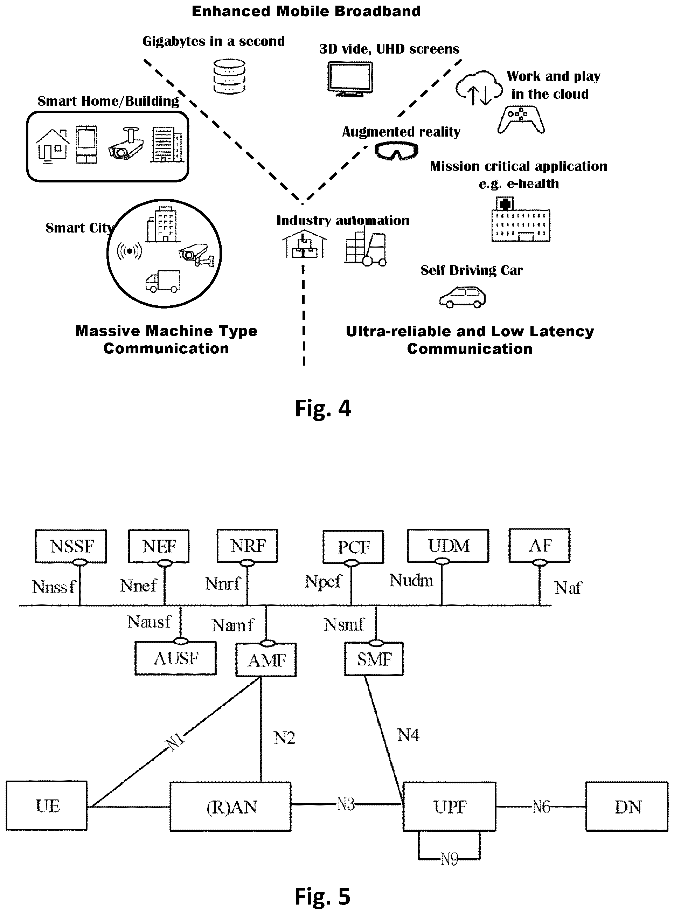

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig.2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sildelink control information (SCI) or the 2nd stage SCI.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

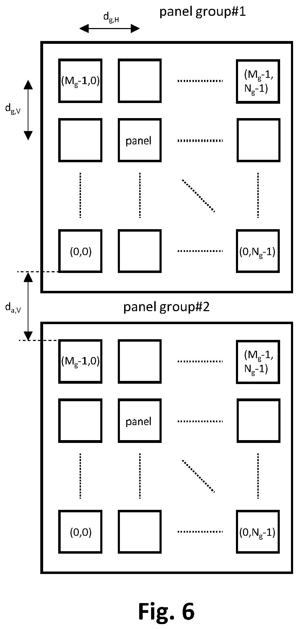

According to ongoing 3GPP discussions, the antenna array may be grouped into multiple panel groups. **Fig. 6** illustrates an example for antenna array grouping as discussed in 3GPP (see, for example, "RAN1 Chair's note", 3GPP TSG RAN WG1 #110, Toulouse, France, August 22-26, 2022, version 21, available at https://www.3gpp.org/ftp/tsg ran/WG1 RL1/TSGR1 110/lnbox/Chair notes, in particular pages 121-126). In the example illustrated in Fig. 6, separate Tx-/Rx antenna arrays are modelled by two panel groups. For this purpose, legacy parameters (M, N, P, M_{g}, N_{g}), (d_{H}, d_{V}) and (d_{g,H}, d_{g,V}) may be used for describing each panel group:
- M denotes the number of vertical antenna elements within a panel, on one polarization,
- N denotes the number of horizontal antenna elements within a panel, on one polarization,
- P denotes the number of polarizations,
- M_{g} denotes the number of panels in a column within a panel group,
- N_{g} denotes the number of panels in a row within a panel group,
- d_{g,H} denotes an antenna spacing in horizontal direction within a panel group, and
- d_{g,V} denotes an antenna spacing in vertical direction within a panel group.

For indicating the separation between two panel groups, parameters (d_{a,H}, d_{a,V}) may be introduced, wherein
- d_{a,H} denotes a panel group spacing in the horizontal direction; d_{a,H} may be zero, for instance, and
- d_{a,V} denotes a panel group spacing in the vertical direction.

Further, as described in detail e.g. in 3GPP TR 38.901 v17.0.0: "Study on channel model for frequencies from 0.5 to 100 GHz (Release 17), March 2022, section 7.3, the antenna panel may be dual-polarized in some scenarios.

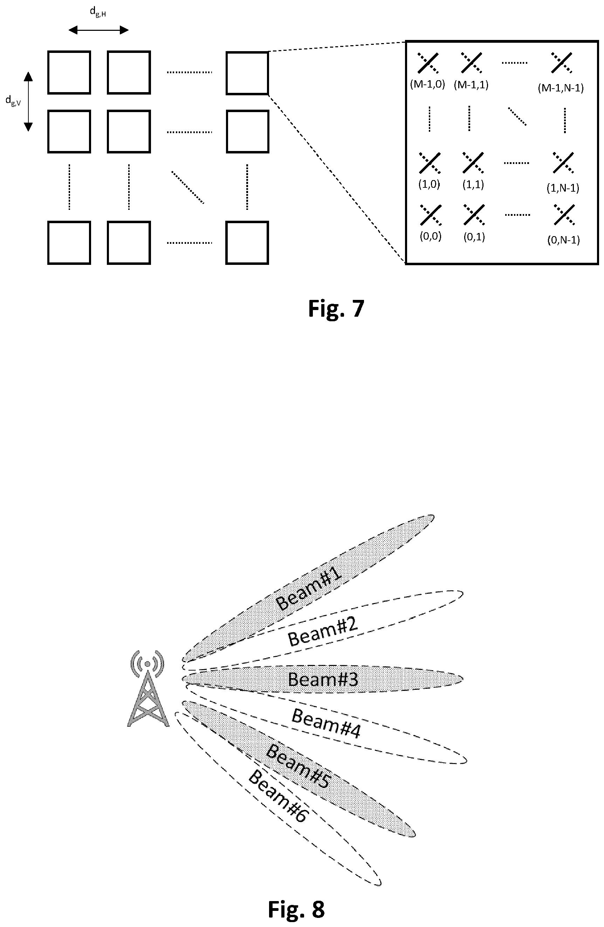

Antenna elements may be placed in the vertical and the horizontal direction, wherein the panel is either single polarized (P=1) or dual polarized (P=2). **Fig. 7** illustrates an example of a cross-polarized panel array antenna model. In the illustration, the antenna array is assumed to be observed from the front. In the model, the antenna elements are uniformly spaced in the horizontal direction and in the vertical direction. The panel array may be described by the parameters (M_{g}, N_{g}, M, N, P).

### Multiple transmission and reception points

5G wireless networks are expected to support massive connectivity, high capacity, ultra-reliability and low latency. Such diverse use case scenarios require disrupting approaches for the realization of future 5G systems. It is envisioned that multiple transmission and reception points (multi-TRPs) will be vital in 5G in order to improve reliability, coverage, and capacity performance through flexible deployment scenarios.

Users on a cell-edge are usually served with a low quality-of-Service (QoS) due to the comparatively long distance from the base station and unfavorable channel conditions (e.g., intercell interference (ICI) from neighboring base stations). Multi-TRP is a technology that has been studied in fourth-generation mobile communication to alleviate the ICI via dynamic coordination between the multi-TRPs, to provide joint scheduling and transmissions/receptions. In this way, a wireless device at the cell edge can be served by multi-TRPs to improve its signal transmission/reception resulting in increased throughput.

Multi-TRPs is a feature that enable gNB to use more than one TRP to communicate to a UE. There are a couple of different ways for this type of communication and it can be summarized as in the following situations. A first TRP and a second TRP may transmit two different PDSCH but control signal (PDCCH/DCI) for the two PDSCH is transmitted by the first TRP only. In this case, if there is some problem in radio link with the first TRP and PDCCH reception fails, the communication via the second TRP is impacted as well. Further, when the first TRP and the second TRP is transmitting two different PDSCH and each TRP is transmitting its own corresponding PDCCH/DCI, if there is any problem in radio link with one of the TRPs, the communication via other TRP can be intact. Still further, the first TRP and the second TRP may jointly process a DL and UL signal.

High carrier frequencies (e.g., millimeter waves) in 5G facilitate deployment of a large number of antennas (e.g., so called massive-MIMO) at the base-station, which requires beam management procedures for multi-TRP technology.

### Beamforming

Beamforming enables radio signals transmission to be directional by a steered array of antennas, instead of spreading signals in all directions. By using this technique, antennas can determine the specific direction of a stronger beam by distributing and concentrating the energy in one lobe or narrow beam. This technique is commonly used in high data rates wireless communication, because beamforming can maximize the signal transmission efficiency in terms of transmitting and receiving.

The benefits that beamforming can bring are higher RSRP and SINR, which may be crucial in 5G broadcast. UEs have strict requirements in terms of coverage and interference as well as SINR, and in order to accomplish these requirements, high-precision beamforming is needed to form narrow beams towards multiple UEs, with maximal gains and accurate beam steering. By carefully adjusting and setting the antenna elements, the energy radiation from antenna arrays can be focused into one certain direction, which is called transmit beamforming, or Tx spatial filtering. Alternatively, the receiver antenna arrays can focus on one reception direction. This process is called receive beamforming, or Rx spatial filtering. Beamforming can increase the directivity and may result in higher link budget. Consequently, the cell coverage and data rates are improved. Meanwhile, the signal interference can be reduced.

### Synchronization Signal Block measurement timing configuration - SMTC - PSS/SSS, PBCH

5G NR has introduced the so-called synchronization signal block, SS block (SSB), which comprises a Primary Synchronization Signal (PSS), a Secondary Synchronization Signal (SSS), and a Physical Broadcast CHannel (PBCH) (in fact PBCH DMRS and PBCH data). The PSS and SSS can be used by UEs to find, synchronize to and identify a network. The PBCH carries a minimum amount of system information including an indication where the remaining broadcast system information is transmitted.

In LTE, these three signals were also used, the PSS, SSS, and PBCH, although not as being part of one SSB. The three SSB components are always transmitted together in NR, e.g. they have the same periodicity. A given SSB may be repeated within an SS burst set, which can be potentially used for a gNB beam-sweeping transmission.

The 5G NR PSS is a Physical Layer specific signal to identify the radio frame boundary and is type of an m-sequence. The 5G NR SSS is also a Physical-Layer specific signal to identify the subframe boundary and is also an m-sequence. The PSS/SSS sequence is defined in 3GPP TS 38.212 and is composed of complex values used by each element/sample of the sequence. Information on the current exemplary 5G implementation of the PSS and SSS is available from TS 38.211 v16.7.0 sections 7.4.2 and 7.4.3, including the respective sequence generation and mapping to physical resources.

The time-frequency structure of an SS/PBCH block is described in the TS 38.211 section 7.4.3.1. In such an exemplary 5G implementation, in the time domain, an SS/PBCH block consists of 4 OFDM symbols, numbered in an increasing order from 0 to 3.

In the frequency domain, an SS/PBCH block consists of 240 contiguous subcarriers, indexed with 0 to 239. The exact subcarriers to be used for each PSS, SSS and PBCH signal within the SS/PBCH block is also defined by Table 7.4.3.1-1.

The timing (OFDM symbols) at which the SS-blocks are transmitted by the gNB can be defined differently. In particular, the first symbol indexes (within each half-frame with an SSB) with which a candidate SSB starts is determined according to 3GPP 38.213 v16.7.0, section 4.1 "Cell search".

The candidate SS/PBCH blocks in a half frame (e.g. termed a set of SSBs) are indexed in an ascending order in time from 0 to *Lmax* - 1. Correspondingly, each SSB within a set of SSBs is assigned a unique number (starting from 0 and increasing by 1).

All the possible candidate SSBs may be transmitted by the base station. However, it is not required to transmit all SSBs. Rather, the gNB may select only some of those SSBs within a set of SSBs and transmit those. The SSBs that are actually transmitted by the SSB can be called the SSB pattern. The SSB pattern has basically the same characteristics as the corresponding set of SSBs, including periodicity.

The gNB informs the UE about the SSB pattern, i.e. which SSBs are in fact transmitted and which are not. This can be done e.g. by the gNB transmitting an SSB bitmap, which defines the SSB pattern, wherein each bit of the SSB bitmap.

All the SSBs can be transmitted with all beams in the system. Alternatively, the SSBs can be transmitted in different beams, e.g. when SSB beamforming is enabled. In that case, each SSB is transmitted on a different beam (spatial filter). Therefore, a beam-sweeping form of transmission of the SSBs is achieved; put differently, the sweeping transmission of the beams (and SSBs) is time-division multiplexed and occurs at different times. UEs located at different positions may receive a different SSB at different times. Each beam may have a beam index, e.g. where the beam index corresponds to the SSB index (also referred to as SSB identifier, SSB ID) that is transmitted via said beam.

### Beam management

Beam management is a set of Layer 1 (PHY) and Layer 2 (MAC) procedures to establish and retain an optimal beam pair for good connectivity. A beam pair consists of a transmit beam and a corresponding receive beam in one link direction.

Before a UE can communicate with the network, it must perform cell search and selection procedures and obtain initial cell synchronization and system information. The first step in that process is acquiring frame synchronization, finding out the cell identity and decoding the MIB and SIB1.

In the case of a multi-antenna system that transmits multiple beams, detecting the beams from gNB is also a part of the initial procedure where the UE normally detects all the beams in the search space.

Beam management can be categorized into three main procedures: initial beam establishment, beam adjustment (also called beam tracking and refining), and beam failure recovery.

Operations performed during one of said main procedures may be referred to as *beam sweeping,* i.e., covering a spatial area with a set of beams transmitted and received according to pre-specified intervals and directions, *beam measurement,* i.e., the evaluation of the quality of the received signal at the gNB or at the UE, *beam determination,* i.e., the selection of the suitable beam or beams either at the gNB or at the UE, according to measurements obtained with the beam measurement procedure, and *beam reporting,* i.e., a procedure used by the UE to send beam quality and beam decision information to gNB.

### Initial beam establishment

Initial beam establishment includes the procedures and functions by which a beam pair is initially established in the downlink (DL) and uplink transmission (UL) directions, for example, when a connection is established. In current 5G NR standard, this is done via beam sweeping, where different SSBs that are associated with different transmission, Tx, beams are transmitted in different OFDM symbols.

During beam sweeping, a gNB transmits beams in all directions in a burst at regular defined intervals. Whenever a UE is synchronizing with the network, it reads the synchronization signal block, SSB, and extracts the primary synchronization signal, PSS, the secondary synchronization signal, SSS, and the physical broadcast channel, PBCH, and demodulation reference signal, DMRS.

A single SS block spans four OFDM symbols in time and 240 subcarriers in frequency (20 resource blocks). Each SS block corresponds to a specific beam, beamformed in a different direction. A group of SS blocks form one SS burst set that spans a 5ms window. The SS burst is repeated periodically with a period of 20 ms, wherein the maximum number of SS blocks in a SS burst set is dependent on the operating frequency range.

The UE can then search for the strongest DL Tx beam, e.g. by adjusting the corresponding DL reception, Rx, beam at UE side as well, and report the selection via a corresponding RACH occasion and preamble to the gNB. In this way, the initial beam pair is established, which may remain valid after a connection is set up until a new beam indication is received by UE.

### Beam adjustment

After the initial beam pair has been established, the beam pair may be constantly adjusted, in order to account for a movement of the UE and/or a change of the environment. This may be referred to as beam adjustment. In addition, beam management can also include refining the beam shape, for example using a narrower CSI-RS beam compared to a relatively wider SSB beam used for initial beam establishment.

The UE measures the beam strength by measuring received signal power. In idle mode, it is based on the synchronization signals, and in connected mode, it can be based on the channel state information reference signal, CSI-RS, in DL and sounding reference signal, SRS, in UL. The UE searches for the best beam periodically using the predefined threshold criteria defined by the gNB and identifies the beam that has highest reference signal received power, RSRP. The UE may then perform a beam reporting procedure.

Measurements and reporting can be carried out on a periodic, semi-periodic or aperiodic basis. As beam adjustment does not happen simultaneously at gNB and UE, one beam per procedure - identified by their index - is the outcome that may be used for UL or DL communication. The gNB may use information and recommendations from the UE to enhance beam adjustement. Transmission of control signaling and data may benefit from the beams selected in the process, as beam adjustment aims at improving the link quality based on ever-changing radio channel conditions. The gNB is in charge of deciding which UL Rx and DL Tx beams it is going to use and indicating the UE about them. Upon knowing the beams the gNB is using, the UE is able to select their own UL Tx and DL Rx beams.

In current NR, for DL Tx beam adjustment, gNB can rely on the UE reporting on beam measurement. A different reference signal, RS, can be configured for beam measurement, such as CSI-RS or SSB.

### Beam failure recovery

Beam failure may happen if the beam cannot be tracked by beam adjustment. This can be the case, for example, when the current beam pair is suddenly blocked unexpectedly and the beam tracking function cannot react quick enough.

Once beam failure has occurred, beam recovery typically requires the following steps:
- beam-failure detection,
- candidate-beam identification,
- recovery-request transmission, and
- network response to the beam-recovery request.

For example, in the case of beam failure due to poor channel condition, the beam recovery process is triggered to get back a new beam. The UE monitors the reference signal and identifies the beam failure once the failure trigger conditions are met. The UE chooses the next best beam for sending in a random access (RA) preamble when the beam failure happens. If first attempt of RA fails, it sweeps to another beam for another RA procedure. The RA preamble is sent in the PRACH. Finally, UE receives a downlink resource allocation and an uplink grant on the physical downlink control channel, PDCCH.

### Transmission Configuration Indicator states and Quasi-Co-Location

As per 3GPP TS 38.214: "Physical layer procedures for data (Release 17)", v. 17.3.0, September 2022, two reference signals can have a quasi-co-located, QCL, relationship. Two antenna ports are said to be quasi co-located if properties of the channel over which a symbol on one antenna port is conveyed can be inferred from the channel over which a symbol on the other antenna port is conveyed.

In 5G NR systems, a transmission configuration indication (TCI) state is used to establish the quasi co-location (QCL) connection between a target reference signals (RS) and a source RS. The antenna ports QCL types are defined below:

| Type | Description |
|---|---|
| QCL-TypeA | Doppler shift, Doppler spread, average delay, delay spread |
| QCL-TypeB | Doppler shift, Doppler spread |
| QCL-TypeC | Doppler shift, average delay |
| QCL-TypeD | Spatial Rx parameter |

TCI states are configured for PDCCH, PDSCH and channel state information reference signals (CSI-RS) in order to convey the QCL indication for the respective RS. In frequency range 1 (FR1, below 7.125 GHz) QCL Types A-C and in frequency range 2 (FR2, above 24.250 GHz) QCL types A-D are applicable. The QCL Type D for FR2 indicates that PDCCH/PDSCH/CSI-RS is transmitted with the same spatial filter as the reference signal associated with that TCI. In FR2, the network can indicate a transmit beam change for PDSCH or PDCCH by switching the TCI state.

Each TCI state can include a TCI state identifier, TCI state ID, and a RS set, or one or more individual RS(s), which are used for QCL reference. Each RS within a TCI state can be associated with a set of one or more Tx (transmit) and/or Rx (receive) beams.

### Artificial intelligence/machine learning for beam management

In practical scenarios, beam-management is faced with various sources of nonlinearities. For ease of handling, conventional mathematical methods usually simplify the real-world scenarios by ignoring these nonlinear factors. By contrast, artificial intelligence/machine learning, AI/ML, is capable of accurately modelling these complex nonlinear relationships and may facilitate efficient beam management.

For example, to avoid repeatedly performing an exhaustive search and to reduce the communication overhead, machine learning may be applied to a beam selection procedure. The beam selection procedure may include a classification task, where the target output is the best beam pair index. A trained AI/ML model may recommend a set of beam pairs. Instead of an exhaustive search over all the beam pairs, beam sweeping overhead may be reduced by searching only among the recommended beam pairs.

That is, if AI/ML is used by a UE in an initial beam establishment procedure, instead of measuring all SSB beams, the UE may measure a subset of SSB beams only. Then, the AI/ML model at the UE may determine the best SSB beam based on the partial beam set measurement.

Further, in a beam adjustment procedure, by using AI/ML, a set of SSB beams may be considered as Set B for the measurement and a set of CSI-RS beams as Set A for prediction. Based on the measurement results, an AI/ML module at the UE (and/or at gNB) may predict the optimal refined CSI-RS beam for the given UE. This may significantly reduce UE measurement effort associating with measuring a large set of CSI-RS beams in order to find the strongest refined beam. At the same time, the RS overhead can be optimized.

Still further, when predicting beam failure in advance by using AI/ML, the failure event may be avoided by proactively switching to another beam.

In an ongoing 3GPP Rel-18 study item "study on AI/ML for NR air interface", use cases have been agreed upon, wherein artificial intelligence/machine learning algorithms are applied to predict the best beam(s) or other quantities/characteristics such as RSRP from a set of second beams (e.g. Set A) based on the measurements of a set of first beams (e.g. Set B). Details can be found, for example, in "Discussion on sub use cases of beam management", 3GPP TSG-RAN WG1 #109-e Meeting, May 9-20, 2022, R1-2204078, and "Discussion on sub use cases of beam management", 3GPP TSG-RAN WG1 #110 Meeting, May 9-20, 2022, R1-2207506.

In a first beam management use case, spatial domain DL beam prediction is performed for a Set A of beams (a plurality of second beams) based on measurement results of a Set B (a plurality of first beams). Set B may be a subset of set A. Alternatively, Set A and Set B may not have a beam in common. In other words, Set A and Set B may be different from one another.

In a second beam management use case, a temporal DL beam prediction may be performed for Set A (a plurality of second beams) of beams based on previous measurements results for Set B (a plurality of first beams). In this case, Set A may be a subset of Set B or different from Set B, in the sense that Set A and Set B do not exhibit a common beam. However, Set A and Set B may be equal, i.e. they may include the same beams.

**Fig. 8** illustrates an example of a spatial relationship between multiple beams, wherein a plurality of first beams (Set B) is a subset of a plurality of second beams (Set A). Specifically, the plurality of beams includes 6 beams (beam#1 to beam#6), which extend in a plurality of different directions, and which are not quasi co-located (QCLed). In the figure, Set A includes beam#1 to beam#6, whereas Set B includes beams # 1, #3 and #5. That is, Set A = {#1, #2, #3, #4, #5, #6} and Set B = {#1, #3, #5}. Hence, in the illustrated example, Set B is a subset of Set A, and a UE may perform, based on measurement results for the beams of Set B, a beam management procedure. For example, the UE may determine, using an AI/ML module, a firs characteristic of a beam included in Set A using measurement results of a second characteristic of the beams included in Set B. The first and second characteristics may be equal or different from one another. For example, said characteristics may relate to a signal strength, a signal to noise ratio, etc. In another example, the AI/ML module may determine a best beam from among the beams included in Set A.

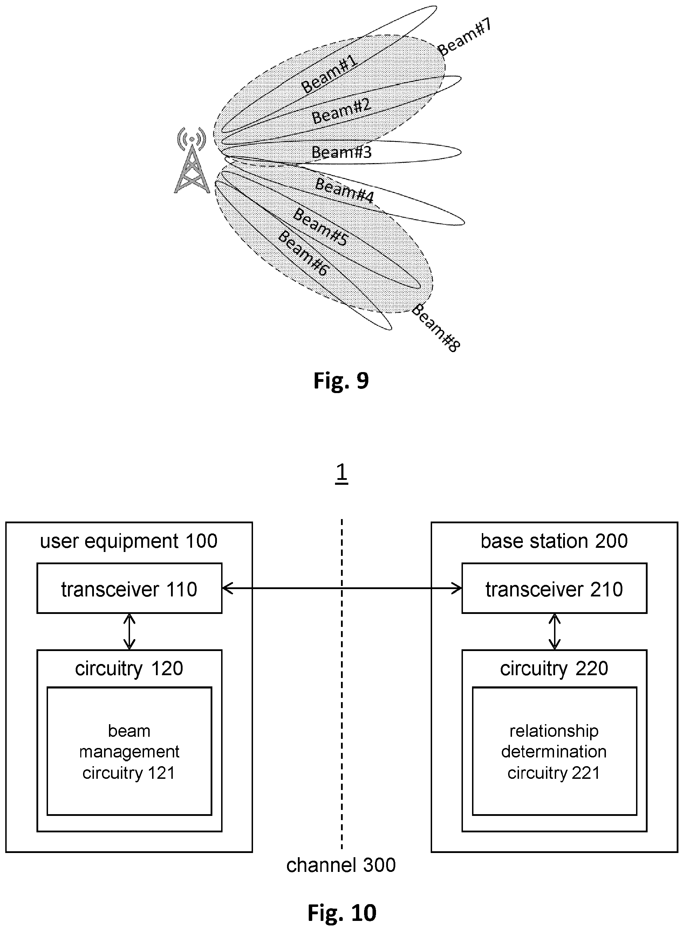

**Fig. 9** illustrates an example of a spatial relationship between multiple beams, wherein a plurality of first beams (Set A) is different from a plurality of second beams (Set B). Specifically, Set A includes beam#1 to beam#6, whereas Set B includes beams #7 and #8. That is, Set A = {#1, #2, #3, #4, #5, #6} and Set B = {#7, #8}. Since Sets A and Set B do not share a common beam, they are different from each other. In the illustrated example, beams #7 and #8 exhibit a wider beam profile, each overlapping a plurality of beams included in Set A. That is beam #7 is quasi co-located to beams #1 to #3, and beam #8 is quasi co-located to beams #4 to #6. Using an AI/ML module with measurement results regarding beams #7 and #8, the UE may determine characteristics of beams #1 to #7, for example. Alternatively or additionally, the AI/ML module may determine a best beam from among the beams of Set A.

When using an AI/ML module for beam management procedures, it is desirable to provide the AI/ML module with information as input, which allows the AI/ML module to provide accurate and reliable prediction results.

### Embodiments

The inventors have identified possibilities for providing improved procedures and for allowing to avoid certain disadvantages, in particular when performing a beam management procedure using an AI/ML model. The present disclosure relates to different solutions and variants for such improved procedures. Accordingly, the present disclosure provides techniques for improving beam management procedures, in particular in scenarios using AI/ML modules for beam prediction.

If an AI/ML module is located at a user equipment, UE, be it for training the AI/ML model and/or for predicting a characteristic of a beam, the training or prediction result may be improved when the relative spatial relationship between the plurality of beams, which may include the beams included in Set A and/or the beams included in Set B, is taken into account. For example, without taking into account that beam #2 is spatially located between beam #1 and beam #3, a trained AI/ML model may not provide reliable prediction results regarding beam #2. In a potential application scenario, when selecting a beam for connection with gNB, the UE may not predict whether beam #2 should be used based on measurement results of beams #1 and #3.

According to the current 5G NR specification, however, the DL transmission beams are decided by gNB and a UE cannot determine any information on relative spatial relationships between a plurality of beams.

The present disclosure in particular provides base stations, corresponding methods for base stations, user equipments (UEs), corresponding methods for UEs, communications systems comprising such base stations and UEs, as well as integrated circuits which, in operation, control a processes of base stations/UE to perform the respective methods.

### Terminology

In the following, UEs, base stations and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### Terminal

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit, a gateway or a scheduling device, for example. Further, in side link communication, a terminal may be adopted instead of a base station. The base station may be a relay apparatus that relays communication between a higher node and a terminal. The base station may be a roadside unit as well. A base station may be a scheduling node, a scheduling device or network node, e.g. forming a part of the network for providing services to terminals. In particular, a base station may provide wireless access to terminals. Communication between the terminal and the base station is typically standardized and may be defined by different layers, such as PHY, MAC, RRC etc. In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term *"base station"* or *"radio base station"* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system.

As already mentioned above, the present disclosure provides a user equipment and a base station. The present disclosure further provides corresponding methods and programs. An example of such communication system is illustrated in **Fig. 10****.** The communication system 1 may be a wireless communication system in accordance with the technical specifications of 5G, in particular a NR communication system. However, the present disclosure is not limited to 3GPP NR and may also be applied to other wireless or cellular systems such as NTNs.

**Fig. 10** illustrates a general, simplified and exemplary block diagram of a user equipment, UE, 100 (also termed communication device) and a base station 200 (e.g. the LTE eNB (alternatively termed ng-eNB) or the gNB in 5G NR). However, in general, a base station may also be a terminal in case of a sidelink connection between two terminals. Moreover, in particular with respect to the use cases of URLLC; eMBB, and mMTC, the user equipment 100 may also be a sensor device, a wearable device, or a connected vehicle, or a controller of an automated machine in an industrial factory. Further, a user equipment 100 may be able to function as a relay between base station 200 and another communication device (e.g. the disclosure is not limited to communication "terminals" or user "terminals"). As illustrated in Fig. 10, the UE 100 and the base station 200 (e.g. eNB/gNB) may communicate with each other over a (wireless) physical channel 300 respectively using their transceivers 110 (UE 100 side) and 210 (base station 200 side). Together, the base station 200 and the user equipment 100 form the communication system 1. The communication system 1 may further include other entities such as those shown in Fig. 1. Communication between the UE 100 and the base station 200 is typically standardized and may be defined by different layers, such as PHY, MAC, RRC etc. (see above background discussion).

As illustrated on the left side of **Fig. 10****,** a user equipment 100 may comprise a transceiver 110 and circuitry 120 (or processing circuitry), and a base station 200 may comprise a transceiver 210 and a (processing) circuitry 220. The transceivers 110, 210 in turn may comprise and/or function as a receiver and a transmitter. In this disclosure, in other words, the term "transceiver" is used for hardware and software components that allow the user equipment 100, or, respectively the base station 200 to transmit and/or receive radio signals over a wireless channel. Accordingly, a transceiver corresponds to a receiver, a transmitter, or a combination of receiver and transmitter. Typically, a base station 200 and a user equipment 100 are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. Moreover, the term "circuitry" includes processing circuitry formed by one or more processors or processing units, etc. The transmitter may be responsible for performing the process of transmitting and other processes related thereto. The receiver may be responsible for performing the process of receiving and other processes related thereto, such as monitoring a channel. A circuitry or processing circuitry may be one or more pieces of hardware such as one or more processors or any LSIs. Between the transceiver and the processing circuitry there may be an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

According to an exemplary embodiment, a user equipment 100 as e.g. illustrated in Fig. 10 is provided. The user equipment 100 comprises a transceiver 110 and circuitry 120. The transceiver 110, in operation, receives a relationship indicator indicating a relative relationship between each of a plurality of beams. The user equipment 100 further comprises circuitry 120 which, in operation, performs a beam management procedure using the relative spatial relationship.

The plurality of beams may include or be equal to a plurality of first beams (Set B). The plurality of beams may include or be equal to a plurality of second beams (Set A). The plurality of first beams (Set B) may be equal to the plurality of second beams (Set A), may be a subset of the plurality of second beams (Set A), or may be different from the plurality of second beams (Set A).

A relative spatial relationship may include information on the relative positions of the plurality of beams with respect to each other. For example, the information on the relative positions may include information on nearest neighbors in a plurality of predetermined directions, when viewed from the gNB or, alternatively, from the UE.

The circuitry 120 may implement more functionality than the above-mentioned performing of the beam management procedure, as it may, for instance, further control the transceiver 110 to receive control signaling and/or to receive or transmit data. Thus, the circuitry 120 is exemplarily considered to include beam management circuitry 121, which is configured to perform said performing of the beam management procedure. The configuration may be provided by hardware adaption and/or by software.

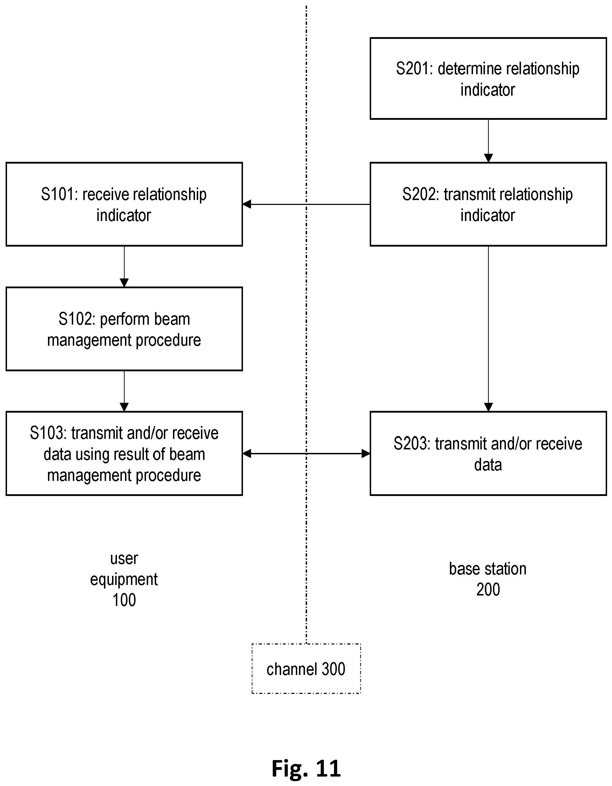

In correspondence with the above described UE 100, a method to be performed by a UE 100 (or communication device) is provided. As shown in **Fig. 11** (left-hand side), the method comprises the steps of (i) receiving S101 a relationship indicator indicating a relative spatial relationship between each of a plurality of beams. The method further comprises (ii) performing S102 a beam management procedure using the relative spatial relationship. For example, the method may further include a step of (iii) transmitting and/or receiving S103 data using a result of the beam management procedure.

As also shown on the right side of **Fig. 10** (right-hand side), according to another exemplary embodiment, a base station 200 is provided. The base station 200 comprises a transceiver 210 and circuitry 220. The circuitry 220, in operation, determines a relationship indicator indicating a relative spatial relationship between a plurality of beams. The base station further comprises a transceiver 210 which, in operation, transmits the relationship indicator.

The circuitry 220 may implement more functionality than the above-mentioned determining, as it may, for instance, further control the transceiver 210 to transmit control signalling and/or to receive or transmit data. Thus, the circuitry 220 is exemplarily considered to include relationship determination circuitry 221, which is configured to perform said determining. The configuration may be provided by hardware adaption and/or by software.

Furthermore, in correspondence with the above described base station 200, a method to be performed by a base station 200 is provided. As shown in **Fig. 11** (right-hand side), the method comprises a steps of (i) determining S201 a relationship indicator indicating a spatial relationship between a plurality of beams. The method further comprises the step of (ii) transmitting S202 the relationship indicator. For example, the method may further comprise a step of (iii) transmitting and/or receiving S203 data.

It is further noted that any of the steps/operations described may be performed or controlled by the circuitry 110 (on the UE 100 side) and/or the circuitry 210 (on the base station 200 side). In the further description, the details and embodiments apply to each of the UE 100, the base station 200 and the methods unless explicit statement or context indicates otherwise.

Moreover it is noted that, since the present disclosure relates to beam management, both entities, the user equipment 100 (typically communication device/transceiver device) and the base station 200 (typically network node) may take part.

### First embodiment

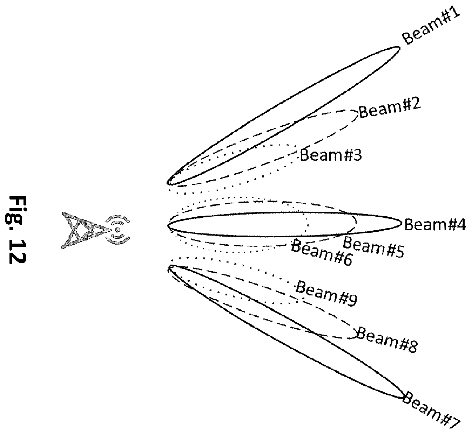

**Fig. 12** illustrates an example of a spatial relationship between a plurality of beams (#1 to #9). served by a base station 200. Beams #1 to #3, beams #4 to #6, and beams #7 to #9 exhibit the same horizontal direction, but different vertical directions, when viewed from the base station's 200 perspective. Beams #1, #4 and #7, beams #2, #5 and #8, and beams #3, #6 and #9 exhibit the same vertical direction, but different horizontal directions. None of the illustrated beams are quasi co-located.

A beam indicator may be used to uniquely indicate a beam. That is, a beam indicator uniquely identifies one of the plurality of beams. As a beam indicator, a beam identifier (beam ID), which may be a parameter to be newly introduced, is used in this example. However, a beam indicator is not limited to a beam ID, and may be realized, for example, by an SSB ID, a reference signal resource ID like a CSI-RS ID, a TCI state ID or a combination thereof.

The user equipment 100 receives a relationship indicator, indicating a relative spatial relationship between each of a plurality of beams (in this example, beams #1 to #9). The relationship indicator may include, for each of a plurality of first beams, one or more beam indicators, wherein each of the beam indicators indicates a beam closest to the respective first beam in one of a plurality of directions. The plurality of directions may be directions not parallel to a direction of propagation of respective beam. For example, the plurality of directions may be left, right, upper and lower directions with respect to a direction of propagation of the respective beam.

In the embodiment, the relationship indicator may include nine entries, each corresponding to one of the plurality of beams #1 to #9. For each of the plurality of beams, the neighboring beam to the left, the right, the upper direction and the lower direction may be indicated.
Entry 1: - beam#1: {left: none; right: beam#4; upper: none; lower: beam#2}
Entry 2: - beam#2: {left: none; right: beam#5; upper: beam#1; lower: beam#3}
Entry 3: - beam#3: {left: none; right: beam#6; upper: beam#2; lower: none}
Entry 4: - beam#4: {left: beam#1; right: beam#7; upper: none; lower: beam#5}
Entry 5: - beam#5: {left: beam#2; right: beam#8; upper: beam#4; lower: beam#6}
Entry 6: - beam#6: {left: beam#3; right: beam#9; upper: beam#5; lower: none}
Entry 7: - beam#7: {left: beam#4; right: none; upper: none; lower: beam#8}
Entry 8: - beam#8: {left: beam#5; right: none; upper: beam#7; lower: beam#9}
Entry 9: - beam#9: {left: beam#6; right: none; upper: beam#8; lower: none}

The direction, in this exemplary embodiment, is set when facing the UE 100 from the base station 200. However, the direction may be indicated with reference to a direction from the UE 100 to the base station 200. In other words, the directions are indicated with respect to the base station's 200 perspective (Tx perspective), but may be indicated for the UE's 100 perspective (Rx perspective)

Further, the directions are indicated as left/right/upper/lower as four directions with respect to a line connecting the UE 100 and the base station 200 in horizontal and vertical direction. However, the present disclosure is not limited thereto, and, in another embodiment, an absolute representation of the directions may be used. For example, an azimuth angle (e.g. North/South/East/West or a combination thereof) and an elevation angle indicating an angle with respect to a horizontal plane may be used for indicating the nearest neighboring beams. With this approach, the indication of the directions of the nearest neighboring beams is decoupled from the location and/or orientation of the base station 200 and/or the UE 100.

Further, in the example, the number of entries in the relationship indicator corresponds to the number of beams in the plurality of beams (i.e. 9). However, the present disclosure is not limited thereto, and the number of entries in the relationship indicator may be different from the number of beams included in the plurality of beams. For example, the relationship indicator may include a number of entries corresponding to the number of first beams (Set B). The plurality of first beams may be equal to the plurality of beams or may be a subset of the plurality of beams.

For example, when the plurality of first beams (Set B) is equal to {#1, #5, #9} and a plurality of second beams (Set A) is {#2, #3, #4, #6, #7, #8}, the relationship indicator may only include entries 1, 5 and 9 corresponding to the beams included in the plurality of first beams. In this case, the relationship indicator indicates the relative spatial relationship between beams #1, #2, #4, #5, #6, #8 and #9 with respect to each other. That is, the relationship indicator is not required to indicate each relative spatial relationship between all beams, but may indicate at least a relative spatial relationship between two beams.

In another example, the number of entries of the relationship indicator may be equal to the number of beams included in the plurality of second beams, i.e. set A. Specifically, when the set of first beams (Set B) is a subset of the plurality of second beams (Set A), the relationship indicator may include the entries corresponding to the beams included in the plurality of second beams (Set A), indicating the nearest neighbors in respective directions of the beams of the plurality of second beams (Set A).

In general, when performing beam prediction using an AI/ML module located at the UE 100, more entries of the relationship indicator, i.e. a better knowledge of the relative spatial relationship between the beams, may allow for a more accurate and reliable prediction results.

### Second embodiment

In a second embodiment, the relationship indicator includes a plurality of beam indicators, wherein each beam indicator indicates a beam included in the plurality of beams. Further, each beam indicator is associated with at least one element of a grid.

The following Table 1 illustrates a grid having 9 (3 × 3) grid elements in a rectangular arrangement. Each grid element is associated with a beam ID. The relationship indicator represents the relative spatial relationship of the plurality of beams indicated in **Fig. 12****.** Specifically, from the Tx perspective, beam#1 is located to the left of beam#4 and above beam#2. Further, beam#4 is located to the right of beam #1, to the left of beam#7, and above beam #5. Further, beam#7 is located to the right of beam#4 and above beam#8. Further, beam#2 is located to the left of beam#5, below beam#1 and to the left of beam#8, and so on.

**Table 1**

| | | |
|---|---|---|
| Beam#1 | Beam#4 | Beam#7 |
| Beam#2 | Beam#5 | Beam#8 |
| Beam#3 | Beam#6 | Beam#9 |

Just as in the first embodiment, the present disclosure is not limited to a grid having grid elements associated with beam IDs as viewed from the Tx perspective, but may include the beam IDs as viewed from the Rx perspective.

Further, the grid is not limited to a rectangular 3 × 3 grid, but may be a rectangular grid having different dimensions in terms of grid elements. Further, the grid may not be rectangular, but also a regular hexagonal grid, a quadratic grid, an irregular grid, or the like.

The grid indicates a relative spatial relationship between each of the elements of the grid. By associating the beams ID with the grid elements, the relative spatial relationship between the beams is mapped to the grid. The grid and the relative location of its grid elements may be predetermined, or may be determined, e.g. by a base station 200, and signaled to the UE 100.

The grid and the association of beam IDs to its grid elements may represent a mapping of the locations of coverage areas of the beams on a reference plane. The reference plane may be a (virtual) plane located on Earth's surface. The locations of the coverage areas on said reference plane is mapped to the association of the beam IDs and the elements of the grid. In other words, the association of the beam IDs to the grid elements, having a specific relative location to each other, represents the physical location of the coverage areas of the plurality of beams on the reference plane.

That is, the relative spatial location of the plurality of beams may be indicated using a plurality of beam identifiers, which are associated to the elements of the grid. The resolution of the grid, i.e. the number of grid elements used to represent a given area of the reference plane (a higher number of grid elements representing a given area of the reference plane corresponds to a higher resolution) may be predefined by a standard, for instance, or may be configured semi-statically by RRC signaling, or may be determined by applying a certain rule.

For example, the resolution may be set such that a beam, from the plurality of beams, which exhibits the narrowest beam profile, is mapped to one grid element only. A beam having a wider beam profile may be mapped to/associated with a plurality of grid elements, so as to resemble the coverage area of the beam on the reference plane. Further, multiple beams may be mapped to/multiple beam IDs may be associated with one grid element. Still further, a grid element may not be associated with any beam ID.

The following Table 2 illustrates an exemplary mapping of beams to/association of beam indicators with grid elements of a rectangular 3 × 3 grid. In the example, the beam indicators are realized by SSB IDs and CSI-RS IDs. As described for the first embodiment, a beam indicator may be an SSB ID, a reference signal resource identifier, a transmission configuration state identifier (TCI State ID), a beam identifier or the like.

**Table 2**

| | | |
|---|---|---|
| **SSB#1** | **SSB#1** CSI-RS#1 | **SSB#2** CSI-RS#3 |
| **SSB#1** | CSI-RS#2 | **SSB#2** CSI-RS#4 |
| CSI-RS#5 | CSI-RS#6 | CSI-RS#7 |

The beams indicated by SSB#1 and SSB#2 are beams having a coverage area, which is mapped to more than one element of the grid. That is, said beams may be considered to be wide beams. The beams indicated by CSI-RS#1 to #7 are narrow beams, which are each mapped to one element of the grid. Further, beams indicated by SSB#1 and CSI-RS#1 are quasi co-located with beam CSI-RS#1 having beam SSB#1 as its QCL source. Similarly, beam CSI-RS#3 and beam CSI-RS#4 have beam SSB#2 as QCL source.

In the example illustrated by the following Table 3, beams are mapped to grid elements and their beam identifiers are associated with said grid elements, wherein no beam is mapped to two of the grid elements.

**Table 3**

| | | |
|---|---|---|
| TCI-State#1 | TCI-State#3 | TCI-State#6 |
| TCI-State#2 | TCI-State#4 | TCI-State#7 |
| none | TCI-State#5 | none |

The beams mapped to the grid elements are indicated using TCI State IDs as beam indicators, but may be indicated using a different beam indicator, as detailed further above. Further, "none" in the table means that there is no beam mapped to the corresponding grid element. This mapping indicates that there is no beam transmitted in a particular direction corresponding/mapped to respective grid element.

As in the first embodiment, different and/or mixed beam representations (beam indicators) may be indicated for the grid. Further, the beams indicated may be the beams included in a plurality of first beams (Set A) only, a plurality of second beams (Set B) only, or in the plurality of first beams or the plurality of second beams (i.e. Set A and Set B).

### Other aspects

In the following, certain aspect of the present disclosure are described, which may be applied, for example, to the first and/or second embodiment.

### Representation of a beam/signaling of a relationship indicator

As described further above, a beam may be indicated by a beam indicator, which may be an SSB ID, a reference signal resource ID like a CSI-RS ID, a transmission configuration indication state ID (TCI ID), a beam identifier or the like.

Further, the relationship indicator may be received by the UE 100 via broadcast signaling or radio resource control, RRC signaling, that is dedicated to UE 100. However, alternatively or additionally, the UE 100 may receive the AI/ML model together with the relationship indicator. That is, the AI/ML model may have been trained using a specific relative spatial relationship between the plurality of beams. When receiving the AI/ML model, the applied relative spatial relationship may be included. Alternatively, the relative spatial relationship may be associated with the AI/ML model. Thus, the UE 100 may not receive an explicit indication of the relative spatial relationship of the plurality of beams. In contrast, said relative spatial relationship may be implicitly signaled by the transmission of the AI/ML model. In other words, the AI/ML model itself may serve as the relationship indicator. The AI/ML model may be received by the UE 100 from a base station 200 or may be received independently from the base station 200 and wireless communication within the wireless network. For example, the UE 100 may be preconfigured with the AI/ML model or may receive the AI/ML model when connected to a different communication network like the internet via WLAN, for example.

In an embodiment, the UE 100 may obtain a plurality of AI/ML models. This may be achieved by installing a plurality of built-in AI/ML models (for example during the manufacturing stage), or by training a plurality of AI/ML models using results of beam measurement procedures and/or, for example, a known or assumed relative spatial relationship between a plurality of beams. In this case, the relationship indicator may indicate one of the plurality of AI/ML models as the AI/ML model to be used for performing the beam management procedure. That is, the relative spatial relationship between the plurality of beams may not be explicitly indicated by the relationship indicator. In contrast, the relationship indicator may indicate the AI/ML model to be used and, thereby, implicitly indicate the relative spatial relationship, which is associated with the indicated AI/ML model.

### Use as assistance information

In the description provided above, the relationship indicator indicates a relative spatial relationship between a plurality of beams. However, said relative spatial relationship indicated by the relationship indicator is not necessarily required to accurately represent an actual relative spatial relationship between the beams.

That is, the network, e.g. the base station 200, may consider effects like shadowing and multi-path reflections of the beams when determining the relative spatial relationship to be indicated by the relationship indicator. The indicated relative spatial relationship may differ from the actual, real, physical, relative spatial relationship in order to improve the AI/ML model performance.

With this approach, the network is provided with a capability to influence the input made by the UE 100 to its AI/ML model in order to improve a prediction result. Further, the actual beam deployment is not required to be disclosed to the UE 100.

### Logical definition of the beams

Further, the indicated beams are to be understood as being defined in a logical rather than in a physical manner. That is, an indicated beam is not necessarily required to correspond to an actual antenna or an actual antenna array.

### Multiple transmit reception points (TRPs)

In a multi-TRP scenario, in which some beams are served by a first TRP and some other beams are served by a different TRP, wherein the first and second TRPs belong to the same cell, a relationship indicator as described above may be transmitted for each TRP. Alternatively, one relationship indicator may be transmitted for both TRPs of the cell. That is, in a multi-TRP scenario having multiple TRPs of the same cell, either multiple relationship indicators may be transmitted to the UE 100, each corresponding to one of the TRPs, or one relationship indicator may be transmitted tot eh UE 100 including information on the beams of all TRPs.

Further, in a case where the UE 100 may be served by multiple beams of different cells or need to switch the serving beam across different cells (e.g. inter-cell beam switching, inter-cell L1/L2 handover), the UE 100 may receive a relationship indicator indicating the relative spatial relationship of beams of the different cells. In this case, the relationship indicator may include cell indicators, which indicate one of the cells, in association with beam indicator.

For example, in a modification of the first embodiment, each entry and each indicated beam may be associated with a respective cell indicator, as illustrated in the exemplary entry below:
Entry 1 - beam#1 of cell A:
{left: beam#1 of cell B; right: beam#4 of cell A; upper: none; lower: beam#2 of cell A}

### Additional information - Tx power indicator

In addition to the relative spatial relationship between the plurality of beams, the relationship indicator may include information regarding a transmission power (Tx power) for each indicated beam.

For example, one or more beam indicators may be associated with a transmission power indicator indicating respective transmission power. The UE 100 may determine relative power differences between the plurality of indicated beams and use said relative power differences as input to the AI/ML model. This may further improve the prediction accuracy and reliability.

### Antenna array grouping

As described above with reference to Fig. 6, an antenna array may be grouped into multiple panel groups. In this case, the relationship indicator may indicate the relative spatial relationship between the plurality of beams for each of the panels groups separately, or for a plurality of panel groups. For example, the UE 100 may receive a relationship indicator for each of the panel groups, wherein each relationship indicator indicates the relative spatial relationship between a plurality of beams of respective panel group.

### Antenna panel polarization

As described above with reference to Fig. 7, a panel antenna array may be either single polarized (P=1) or dual polarized (P=2). For example, the polarizations in the case of dual polarization may be referred to as x- and y-polarizations. The relationship indicator may indicate the relative spatial relationship between the plurality of beams for each of the polarizations separately, or for a both polarizations. For example, the UE 100 may receive a relationship indicator for each of the polarizations, wherein each relationship indicator indicates the relative spatial relationship between a plurality of beams of respective polarization.

### AI/ML based beam management

As described above, the UE 100 may perform a beam management procedure using the relationship indicator and the indicated relative spatial relationship between a plurality of beams. During the AI/ML-based beam management procedure, a characteristic of beams included in a second set of beams (Set A) may be predicted using beam measurement results of a plurality of first beams (Set B).

For this purpose, the UE 100 may determine the first beams itself or may be configured by a base station 200, e.g. by broadcasting or via RRC signaling, with the beams to be used for beam measurement when performing the beam management procedure using the AI/ML model. The determination of the plurality of first beams could be based on random selection, or some predetermined rule. Alternatively, it can be part of the output of the AI/ML model. In other words, the AI/ML model used for beam prediction may also generates or updates the Set B.

After the AI/ML model has provided a prediction result, the UE 100, when in RRC_CONNECTED state, may transmit the prediction result to the base station 200. For example, the UE 100 may transmit a result indicator indicating the result of the beam management procedure to the base station 200. One example of such result could be the top N beams with strongest RSRP values, N being a natural number. The result indicator could also include other information, in addition or alternatively, such as probability for the beam to be the best beam, the associated confidence, beam application time/dwelling time, predicted beam failure, etc. The base station 200 may then use the indicted prediction result. For example, the base station 200 may change the DL beam currently serving the UE 100, or keep the current DL beam for the UE 100 if the predicted beam quality is sufficiently good. Beam quality may be determined to be sufficiently good when a measure of beam quality meets a predetermined condition, for example. Further, the base station 200 may decide to trigger additional measurement report from UE 100 to further verify the prediction result. In RRC_IDLE or RRC_INACTIVE state, the UE 100 may determine whether to switch to monitoring another DL beam using the prediction result by itself.

However, the present disclosure is not limited to using an AI/ML model for performing the beam management procedure, and the relative spatial relationship may be used in other implementations of said procedure.

### Further technical advantages

With above-described aspects of the present disclosure, the reliability and accuracy of a beam management procedure may be improved, by using the relative spatial relationship between a plurality of beams. By indicating the relative spatial relationship rather than a detailed beam shape, signaling overhead may be reduced. Further, the base station is not required to disclose its implementation details. Still further, the UE may be put into a position where machine learning/training of an AI/ML model may be performed using the relative spatial relationship and results of beam measurement procedures.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive

### Further aspects

According to a first aspect, provided is a user equipment, UE, comprising a transceiver which, in operation, receives a relationship indicator indicating a relative spatial relationship between each of a plurality of beams. The UE further comprises circuitry which, in operation, performs a beam management procedure using the relative spatial relationship.

For example, a beam management procedure may include a beam measurement procedure, a beam reporting procedure, a beam feature detection procedure, and/or a beam quality prediction procedure.

In an embodiment, the relationship indicator includes, for each of a plurality of first beams, one or more beam indicators. Each of the one or more beam indicators may indicate a beam closest tot eh respective first beam in one of a plurality of directions.

In an embodiment, the relationship indicator includes a plurality of beam indicators, wherein each beam indicator indicates a beam included in the plurality of beams. Further, each beam indicator may be associated with at least one element of a grid.

For example, the grid indicates a relative spatial relationship between each of the elements of the grid.

For example, the grid represents a reference plane. The association of the beam indicators with respective elements of the grid represents a mapping of coverage areas of the plurality of beams with respect to the reference plane.

The reference plane may be a virtual plane including the coverage areas of the plurality of beams. For example, the reference plane may be located on a predetermined area of earth's surface. Alternatively, for example, the reference plane may be located in between positions of a base station serving the UE and the UE, wherein the reference plane is oriented normal to a line of sight between the base station and the UE.

In embodiments, at least one of the plurality of beam indicators is associated with two or more elements of the grid, and/or at least two of the plurality of beam indicators are associated with a same element of the grid.

In an embodiment, each beam indicator is a synchronization signal block identifier, SSB ID, a reference signal resource identifier, and/or a transmission configuration indication state identifier, TCI state ID.

In an embodiment, the transceiver, in operation, receives the relationship indicator via broadcast signaling or radio resource control, RRC, signaling.

In an embodiment, the beam management procedure includes (i) a beam measurement procedure of measuring a first characteristic of each of the plurality of first beams, using the transceiver, and (ii) a beam prediction procedure of predicting a second characteristic of a beam included in a plurality of second beams.

The first characteristic may be different or equal to the second characteristic. Examples of the first characteristic and/or second characteristic include a signal strength, a spatial distribution of the signal strength, reference signal received power (RSRP), reference signal received quality (RSRQ), signal to interference plus noise ratio (SINR), signal to noise ratio, or the like.

For example, the plurality of second beams may equal to the plurality of first beams, may be a subset of the plurality of first beams, or may be different from the plurality of first beams.

When the plurality of first beams and the plurality of second beams are different from one another, they may include no common beam. In other words, the plurality of first beams is different from the plurality of second beams when there is no overlap there between.

In an embodiment, the circuitry, in operation, performs the beam management procedure using an artificial intelligence/machine learning, AI/ML, model.

For example, the transceiver, in operation, receives the AI/ML model including the relationship indicator and/or associated with the relative spatial relationship between each of the plurality of beams.

For example, the AI/ML model may be trained by a base station and transmitted to the UE. When the UE receives the AI/ML model associated with the relative relationship between each of the plurality of beams, the AI/ML model serves as the relationship indicator. In other words, the relative spatial relationship of the plurality of beams is implicitly indicated by the AI/ML model.

For example, the relationship indicator indicates an AI/ML model from among a plurality of AI/ML models; and the circuitry, in operation, determines the AI/ML model indicated by the relationship indicator as the AI/ML model for performing the beam management procedure.

For example, the UE may obtain the plurality of AI/ML models by performing machine learning assuming a plurality of relative spatial relationships between each of the plurality of beams. In this case, by indicating the AI/ML model by the relationship indicator, the relative spatial relationship between each of the plurality of beams is indicated implicitly. An explicit indication of the relative spatial relationship is not necessarily transmitted.

According to a second aspect, provided is a method for a user equipment, UE, comprising (i) receiving a relationship indicator indicating a relative spatial relationship between each of a plurality of beams; and (ii) performing a beam management procedure using the relative spatial relationship.

For example, a beam management procedure may include a beam measurement procedure, a beam reporting procedure, a beam feature detection procedure, and/or a beam quality prediction procedure.

In an embodiment, the relationship indicator includes, for each of a plurality of first beams, one or more beam indicators. Each of the one or more beam indicators may indicate a beam closest tot eh respective first beam in one of a plurality of directions.

In an embodiment, the relationship indicator includes a plurality of beam indicators, wherein each beam indicator indicates a beam included in the plurality of beams. Further, each beam indicator may be associated with at least one element of a grid.

For example, the grid indicates a relative spatial relationship between each of the elements of the grid.

For example, the grid represents a reference plane. The association of the beam indicators with respective elements of the grid represents a mapping of coverage areas of the plurality of beams with respect to the reference plane.

The reference plane may be a virtual plane including the coverage areas of the plurality of beams. For example, the reference plane may be located on a predetermined area of earth's surface. Alternatively, for example, the reference plane may be located in between positions of a base station serving the UE and the UE, wherein the reference plane is oriented normal to a line of sight between the base station and the UE.

In embodiments, at least one of the plurality of beam indicators is associated with two or more elements of the grid, and/or at least two of the plurality of beam indicators are associated with a same element of the grid.

In an embodiment, each beam indicator is a synchronization signal block identifier, SSB ID, a reference signal resource identifier, and/or a transmission configuration indication state identifier, TCI state ID.

In an embodiment, the method comprises receiving the relationship indicator via broadcast signaling or radio resource control, RRC, signaling.

In an embodiment, the beam management procedure includes (i) a beam measurement procedure of measuring a first characteristic of each of the plurality of first beams, using a transceiver, and (ii) a beam prediction procedure of predicting a second characteristic of a beam included in a plurality of second beams.

The first characteristic may be different or equal to the second characteristic. Examples of the first characteristic and/or second characteristic include a signal strength, a spatial distribution of the signal strength, reference signal received power (RSRP), reference signal received quality (RSRQ), signal to interference plus noise ratio (SINR), signal to noise ratio, or the like.

For example, the plurality of second beams may equal to the plurality of first beams, may be a subset of the plurality of first beams, or may be different from the plurality of first beams.

When the plurality of first beams and the plurality of second beams are different from one another, they may include no common beam. In other words, the plurality of first beams is different from the plurality of second beams when there is no overlap there between.

In an embodiment, the beam management procedure is performed using an artificial intelligence/machine learning, AI/ML, model.

For example, the AI/ML model including the relationship indicator and/or associated with the relative spatial relationship between each of the plurality of beams is received.

For example, the AI/ML model may be trained by a base station and transmitted to the UE. When receives the AI/ML model associated with the relative relationship between each of the plurality of beams is received, the AI/ML model serves as the relationship indicator. In other words, the relative spatial relationship of the plurality of beams is implicitly indicated by the AI/ML model.

For example, the relationship indicator indicates an AI/ML model from among a plurality of AI/ML models; and the AI/ML model indicated by the relationship indicator is determined as the AI/ML model for performing the beam management procedure.

For example, the plurality of AI/ML models my be obtained by performing machine learning assuming a plurality of relative spatial relationships between each of the plurality of beams. In this case, by indicating the AI/ML model by the relationship indicator, the relative spatial relationship between each of the plurality of beams is indicated implicitly. An explicit indication of the relative spatial relationship is not necessarily transmitted.

According to a third aspect, provided is a base station, comprising circuitry which, in operation, determines a relationship indicator indicating a relative spatial relationship between a plurality of beams; and a transceiver which, in operation, transmits the relationship indicator.

In an embodiment, the relationship indicator includes, for each of a plurality of first beams, one or more beam indicators. Each of the one or more beam indicators may indicate a beam closest to the respective first beam in one of a plurality of directions.

In an embodiment, the relationship indicator includes a plurality of beam indicators, wherein each beam indicator indicates a beam included in the plurality of beams. Further, each beam indicator may be associated with at least one element of a grid.

For example, the grid indicates a relative spatial relationship between each of the elements of the grid.

For example, the grid represents a reference plane. The association of the beam indicators with respective elements of the grid represents a mapping of coverage areas of the plurality of beams with respect to the reference plane.

The reference plane may be a virtual plane including the coverage areas of the plurality of beams. For example, the reference plane may be located on a predetermined area of earth's surface. Alternatively, for example, the reference plane may be located in between positions of the base station serving a UE and the UE, wherein the reference plane is oriented normal to a line of sight between the base station and the UE.

In embodiments, at least one of the plurality of beam indicators is associated with two or more elements of the grid, and/or at least two of the plurality of beam indicators are associated with a same element of the grid.

In an embodiment, each beam indicator is a synchronization signal block identifier, SSB ID, a reference signal resource identifier, and/or a transmission configuration indication state identifier, TCI state ID.

In an embodiment, the transceiver, in operation, transmits the relationship indicator via broadcast signaling or radio resource control, RRC, signaling.

For example, the transceiver, in operation, transmits an AI/ML model including the relationship indicator and/or associated with the relative spatial relationship between each of the plurality of beams.

For example, the AI/ML model may be trained by the base station and transmitted to a UE. When the UE receives the AI/ML model associated with the relative relationship between each of the plurality of beams, the AI/ML model serves as the relationship indicator. In other words, the relative spatial relationship of the plurality of beams is implicitly indicated by the AI/ML model.

For example, the relationship indicator indicates an AI/ML model from among a plurality of AI/ML models as an AI/ML model for performing a beam management procedure.

For example, a UE may obtain the plurality of AI/ML models by performing machine learning assuming a plurality of relative spatial relationships between each of the plurality of beams. In this case, by indicating the AI/ML model by the relationship indicator, the relative spatial relationship between each of the plurality of beams is indicated implicitly. An explicit indication of the relative spatial relationship is not necessarily transmitted.

According to a fourth aspect, provided is a method for a base station, the method comprising (i) determining a relationship indicator indicating a relative spatial relationship between a plurality of beams; and (ii) transmitting the relationship indicator.

In an embodiment, the relationship indicator includes, for each of a plurality of first beams, one or more beam indicators. Each of the one or more beam indicators may indicate a beam closest tot eh respective first beam in one of a plurality of directions.

In an embodiment, the relationship indicator includes a plurality of beam indicators, wherein each beam indicator indicates a beam included in the plurality of beams. Further, each beam indicator may be associated with at least one element of a grid.

For example, the grid indicates a relative spatial relationship between each of the elements of the grid.

For example, the grid represents a reference plane. The association of the beam indicators with respective elements of the grid represents a mapping of coverage areas of the plurality of beams with respect to the reference plane.

The reference plane may be a virtual plane including the coverage areas of the plurality of beams. For example, the reference plane may be located on a predetermined area of earth's surface. Alternatively, for example, the reference plane may be located in between positions of the base station serving a UE and the UE, wherein the reference plane is oriented normal to a line of sight between the base station and the UE.

In embodiments, at least one of the plurality of beam indicators is associated with two or more elements of the grid, and/or at least two of the plurality of beam indicators are associated with a same element of the grid.

In an embodiment, each beam indicator is a synchronization signal block identifier, SSB ID, a reference signal resource identifier, and/or a transmission configuration indication state identifier, TCI state ID.

In an embodiment, the relationship indicator is transmitted via broadcast signaling or radio resource control, RRC, signaling.

For example, an AI/ML model including the relationship indicator and/or associated with the relative spatial relationship between each of the plurality of beams is transmitted.

For example, the AI/ML model may be trained by a base station and transmitted to a UE. When the UE receives the AI/ML model associated with the relative relationship between each of the plurality of beams, the AI/ML model serves as the relationship indicator. In other words, the relative spatial relationship of the plurality of beams is implicitly indicated by the AI/ML model.

For example, the relationship indicator indicates an AI/ML model from among a plurality of AI/ML models as an AI/ML model for performing a beam management procedure.

For example, a UE may obtain the plurality of AI/ML models by performing machine learning assuming a plurality of relative spatial relationships between each of the plurality of beams. In this case, by indicating the AI/ML model by the relationship indicator, the relative spatial relationship between each of the plurality of beams is indicated implicitly. An explicit indication of the relative spatial relationship is not necessarily transmitted.

Summarizing, some exemplary embodiments relate to a user equipment, UE, a base station and respective methods for a UE and a base station. For example, the UE comprises a transceiver which, in operation, receives a relationship indicator indicating a relative spatial relationship between each of a plurality of beams. The UE further comprises circuitry which, in operation, performs a beam management procedure using the relative spatial relationship.

## Claims

1. A user equipment, UE, comprising
a transceiver which, in operation, receives a relationship indicator indicating a relative spatial relationship between each of a plurality of beams; and
circuitry which, in operation, performs a beam management procedure using the relative spatial relationship.

2. The UE according to claim 1 wherein
the relationship indicator includes, for each of a plurality of first beams, one or more beam indicators, and
each of the one or more beam indicators indicates a beam closest to the respective first beam in one of a plurality of directions.

3. The UE according to claim 1, wherein
the relationship indicator includes a plurality of beam indicators,
each beam indicator indicates a beam included in the plurality of beams, and
each beam indicator is associated with at least one element of a grid.

4. The UE according to claim 3, wherein
the grid indicates a relative spatial relationship between each of the elements of the grid.

5. The UE according to claim 3 or 4, wherein
the grid represents a reference plane, and
the association of the beam indicators with respective elements of the grid represents a mapping of coverage areas of the plurality of beams with respect to the reference plane.

6. The UE according to any one of claims 3 to 5, wherein
at least one of the plurality of beam indicators is associated with two or more elements of the grid, and/or
at least two of the plurality of beam indicators are associated with a same element of the grid.

7. The UE according to any one of claims 2 to 6, wherein
each beam indicator is a synchronization signal block identifier, SSB ID, a reference signal resource identifier, and/or a transmission configuration indication state identifier, TCI state ID.

8. The UE according to any one of claims 1 to 7, wherein
the transceiver, in operation, receives the relationship indicator via broadcast signaling or radio resource control, RRC, signaling.

9. The UE according to any one of claims 1 to 8, wherein
the beam management procedure includes
a beam measurement procedure of measuring a first characteristic of each of the plurality of first beams, using the transceiver, and
a beam prediction procedure of predicting a second characteristic of a beam included in a plurality of second beams.

10. The UE according to claim 9, wherein
the plurality of second beams is equal to the plurality of first beams, is a subset of the plurality of first beams, or is different from the plurality of first beams.

11. The UE according to any one of claims 1 to 10, wherein
the circuitry, in operation, performs the beam management procedure using an artificial intelligence/machine learning, AI/ML, model.

12. The UE according to claim 11, wherein
the transceiver, in operation, receives the AI/ML model including the relationship indicator and/or associated with the relative spatial relationship between each of the plurality of beams.

13. The UE according to claim 11, wherein
the relationship indicator indicates an AI/ML model from among a plurality of AI/ML models; and
the circuitry, in operation, determines the AI/ML model indicated by the relationship indicator as the AI/ML model for performing the beam management procedure.

14. A method for a user equipment, UE, comprising
receiving a relationship indicator indicating a relative spatial relationship between each of a plurality of beams; and
performing a beam management procedure using the relative spatial relationship.

15. A base station, comprising
circuitry which, in operation, determines a relationship indicator indicating a relative spatial relationship between a plurality of beams; and
a transceiver which, in operation, transmits the relationship indicator.
